# EUROPÄISCHE PATENTANMELDUNG

(11) **EP 1 353 003 A2**
(43) Veröffentlichungstag der Anmeldung: **15.10.2003**
(21) Anmeldenummer: 03008258.0
(22) Anmeldetag: 09.04.2003
(51) Int. Cl.: D06B 23/02, F16C 13/02, F16C 33/04, F16C 23/04

(54) **Behandlungsvorrichtung für eine textile Warenbahn**

(30) Priorität: 10.04.2002 DE 10215843
(71) Anmelder: Eduard Küsters Maschinenfabrik GmbH & Co. KG, 47805 Krefeld (DE)
(72) Erfinder: Stitz, Hermann Albert, 51515 Kürten (DE)
(74) Vertreter: Kluin, Jörg-Eden, Dr. Dipl.-Phys.

(57) **Zusammenfassung**

Die Behandlungsvorrichtung für eine textile Warenbahn umfaßt mindestens eine Walze (3), mindestens eine Lagereinrichtung (7) zur drehbaren Lagerung der Walze in der Behandlungsvorrichtung, wobei die Lagereinrichtung einen zur Behandlungsvorrichtung drehfest angeordneten undrehbaren Lagerteil (8) und einen drehfest zu der Walze angeordneten, drehbaren Lagerteil (16) umfaßt. Die Lagereinrichtung ist als Gleitlageranordnung (19) ausgebildet und es besteht zumindest die Lagerfläche zumindest eines der Lagerteile aus einem keramischen Werkstoff.

## Beschreibung

Die Erfindung betrifft eine Behandlungsvorrichtung für eine textile Warenbahn gemäß den Oberbegriffen der Ansprüche 1 und 11.

Zu derartigen Behandlungsvorrichtungen gehören insbesondere Textilbearbeitungs- und -veredelungsmaschinen und -anlagen, bei denen eine textile Warenbahn um eine Mehrzahl von drehbar gelagerten Walzen geführt wird, die ihrerseits in einem Gehäuse zur Aufnahme eines fluiden oder dampfförmigen Behandlungsmediums gelagert sind. Beim Durchlaufen der Behandlungsvorrichtung wird die Warenbahn um die Walzen herumgeführt, wobei für die Dauer des Durchlaufs die textile Warenbahn dem Behandlungsmedium ausgesetzt ist.

Zu derartigen Textilveredelungs- bzw. -bearbeitungsmaschinen gehören auch Waschmaschinen, wie sie beispielsweise von der Eduard Küsters Maschinenfabrik GmbH & Co. KG bekannt sind. Diese Waschmaschinen umfassen ein nach außen geschlossenes, im Betrieb zum Teil mit einer Flüssigkeit gefülltes Gehäuse, in dem eine Vielzahl von Walzen drehbar gelagert ist, um die die textile Warenbahn herumgeführt wird. Oberhalb des Flüssigkeitsspiegels bildet sich in dem Gehäuse eine Sattdampfatmosphäre aus.

Die Lagerung der Walzen in dem Gehäuse erfolgt bei diesen Waschmaschinen außen, d.h. die Walzenzapfen weisen eine Länge auf, daß die Gesamtlänge von Walze und Walzenzapfen die lichte Weite des Gehäuses übersteigt und sie somit durch hierfür vorgesehene Bohrungen aus den Seitenwandungen des Gehäuses herausragen. Die für jeden Walzenzapfen vorgesehene Lagereinrichtung greift dann an dem herausragenden Bereich des Walzenzapfens an.

Nachteilig ist bei dieser Art der Lagerung, daß an jeder Lagerstelle eine Dichtungsanordnung zwischen der Gehäusewandung und dem Achszapfen vorgesehen sein muß, die als Berührungs-Dichtung ausgebildet ist.

Diese Dichtungsanordnungen weisen den Nachteil auf, daß sie verschleißbehaftet und somit störanfällig sind. Ferner führen sie zu einer Reibung, die in der Summe aller Dichtungsanordnungen zu nicht unerheblichen Warenzugkräften führt.

Der Erfindung liegt daher die Aufgabe zugrunde, eine Behandlungsvorrichtung zu schaffen, bei der die mit den erforderlichen Drehdichtungsanordnungen verbundenen Nachteile vermieden sind.

Diese Aufgabe wird durch die in den Ansprüchen 1 und 11 wiedergegebenen Erfindungen gelöst.

Dadurch, daß die Lagereinrichtungen als Gleitlageranordnungen ausgebildet sind und zumindest die Lagerfläche zumindest eines der Lagerteile aus einem keramischen Werkstoff besteht, ist eine Abdichtung der Lageranordnung gegenüber dem Behandlungsmedium nicht mehr notwendig. Die Lageranordnung kann somit weiterhin außerhalb des Gehäuses angeordnet sein, wobei dann lediglich eine die Lagereinrichtung nach außen abdeckende Abdeckkappe dichtwirkend an der Gehäusewandung vorgesehen sein muß.

Aus der DE 10034933A1 ist eine Walze bekannt, die durch die Verwendung von im wesentlichen nicht-metallischer Werkstoffe recyclebar sein soll. Hierdurch soll der Aufwand, der für die Bereitstellung einer Austauschwalze nach Erreichen der Verschleißgrenze erforderlich ist, reduziert werden.

Darüber hinaus ist es möglich, ganz auf die Durchführung des Walzenzapfens durch eine Lochung in der Gehäusewandung zu verzichten, und die Lageranordnung innerhalb des Gehäuses anzuordnen und zwar sowohl unterhalb des Flüssigkeitsspiegels als auch in der Sattdampfatmosphäre.

In beiden Fällen wird die Dichtigkeit der Behandlungsvorrichtung erheblich erhöht. Durch das minimale Totvolumen der Gleitlagerung wird vermieden, daß Verunreinigungen, beispielsweise textile Fasern, in die Lager gelangen, was zu starken Verschleißerhöhungen führen würde. Ferner hat sich überraschenderweise gezeigt, daß zur Schmierung derartiger Gleitlager die minimalen Mengen an zwischen die Lagerflächen gelangende Behandlungsflüssigkeit oder des Kondensats des Behandlungsdampfes ausreichen.

Die Gleitlageranordnung kann derart ausgebildet sein, daß auch die Lagerfläche des anderen Lagerteils ebenfalls aus einem keramischen Werkstoff besteht. Die beiden Lagerflächen können dann aus demselben keramischen Werkstoff oder aus verschiedenen keramischen Werkstoffen hergestellt sein, wodurch im letzteren Falle bei bestimmten Paarungen die Gleitreibung erheblich erniedrigt wird.

Es ist ebenfalls möglich, daß eine Lagerfläche der Lageranordnung aus Kunststoff oder aus Metall besteht.

Besonders bevorzugt ist eine Ausführungsform der erfindungsgemäßen Behandlungsvorrichtung dann, wenn diese ein Gehäuse zur Aufnahme eines fluiden oder dampfförmigen Behandlungsmediums umfaßt, wenn die Lagereinrichtungen innerhalb des Gehäuses angeordnet sind.

Um zu verhindern, daß es bei Durchbiegungen von Walzen zu inneren Spannungen in den Lagereinrichtungen kommt, weisen diese vorzugsweise Mittel auf, die geeignet sind, ein Durchbiegen der Walze aufzunehmen.

Konstruktiv können diese Mittel in einem Element mit einer ballig geformten Außenfläche bestehen, die mit einer komplementär geformten Innenfläche eines Gegenelements zusammenwirkt. Es ist jedoch ebenfalls möglich, auf die Mittel zum Aufnehmen der Durchbiegung der Walze in der Lagereinrichtung zu verzichten und stattdessen die Durchbiegung der Walze innerhalb derselben zu kompensieren. Dies kann beispielsweise durch eine elastische Verbindung des Walzenkörpers mit dem Walzenzapfen geschehen.

Die Erfindung verkörpert sich auch in einer Behandlungsvorrichtung für eine textile Warenbahn, deren Walzen mit Walzenzapfen versehen sind, die aus einem keramischen Material bestehen und den drehbaren Lagerteil ausbilden.

In der Zeichnung ist ein Ausführungsbeispiel der erfindungsgemäßen Behandlungsvorrichtung schematisch dargestellt. Es zeigen:
- Fig. 1: - schematisch - einen Ausschnitt einer erfindungsgemäßen Behandlungsvorrichtung senkrecht zur Längserstreckung der Walzen;
- Fig. 2: dieselbe Behandlungsvorrichtung - schematisch - in einer Ansicht in Längsrichtung der Walzen sowie
- Fig. 3: den Ausschnitt III in Fig. 1 in einer vergrößerten Darstellung.

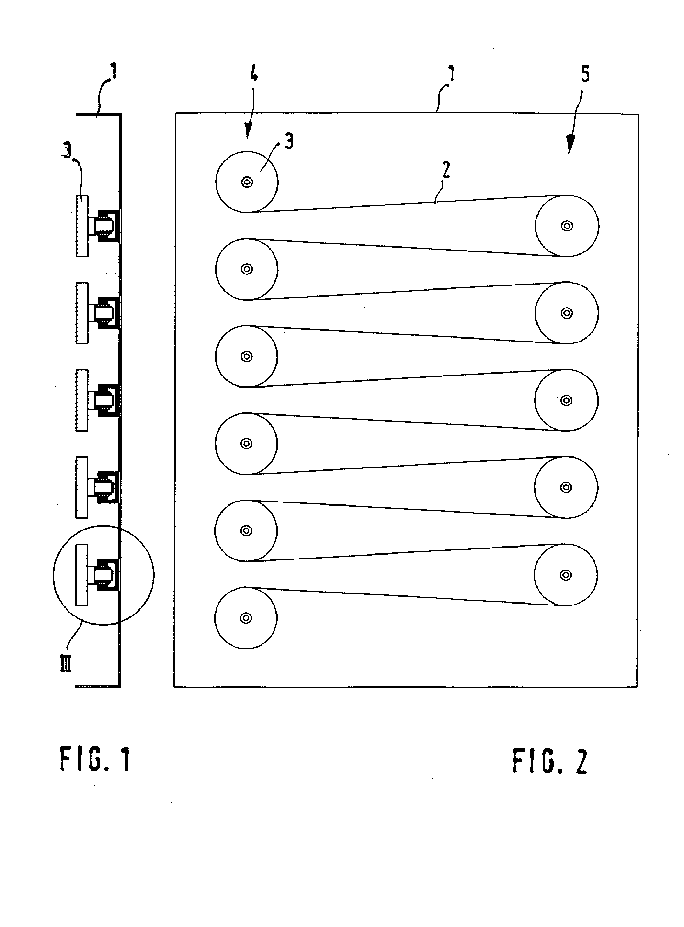

Die als Ganzes mit 100 bezeichnete Behandlungsvorrichtung umfaßt ein Gehäuse 1, das im Betrieb zumindest bis zu einer gewissen Füllstandshöhe mit einem in der Zeichnung nicht dargestellten Behandlungsmedium - beispielsweise einer Behandlungsflüssigkeit oder einem Behandlungsdampf - gefüllt ist. Das Behandlungsmedium dient der Bearbeitung und/oder Veredelung einer textilen Warenbahn 2, die der besseren Übersicht wegen in Fig. 2 lediglich schematisch dargestellt ist. Um eine möglichst lange Verweildauer der kontinuierlich vorlaufenden Warenbahn 2 in dem Behandlungsmedium zu bewirken, durchläuft sie das Gehäuse unter Umschlingung einer Mehrzahl von Walzen 3, die in dem in Fig. 2 dargestellten Ausführungsbeispiel in zwei nebeneinander angeordneten senkrechten Reihen 4, 5 angeordnet sind, von denen in Fig. 1 lediglich die in Fig. 2 rechts dargestellte Reihe 5 erkennbar ist.

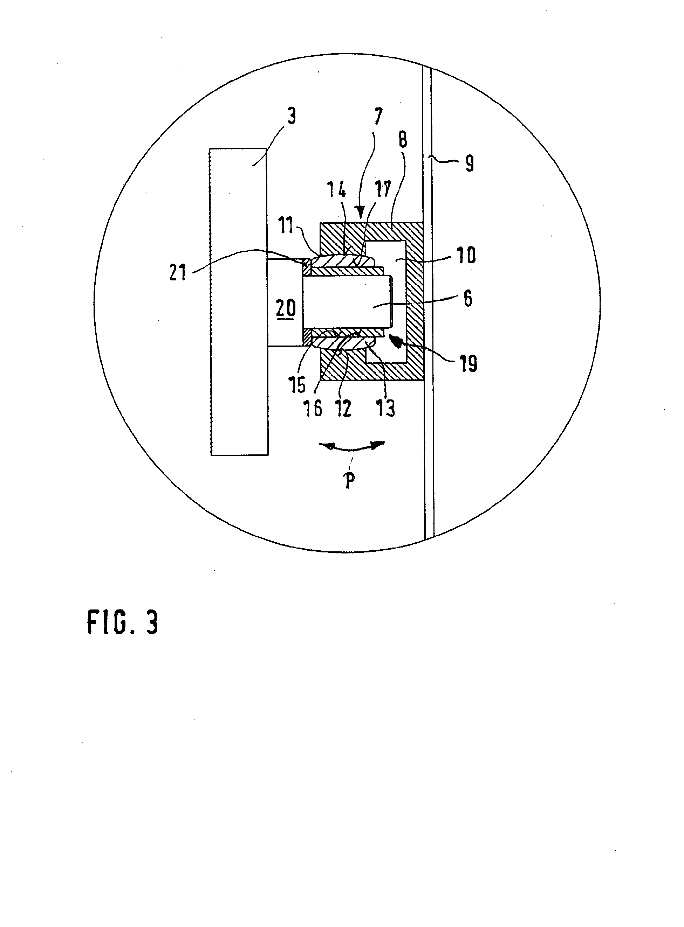

Wie insbesondere Fig. 3 entnehmbar ist, die lediglich den rechten Endbereich einer Walze 3 schematisch darstellt, welcher jedoch mit dem linken Endbereich der Walze übereinstimmt, umfaßt die Walze 3 einen Walzenzapfen 6, der der drehbaren Lagerung der Walze in einer als Ganzes mit 7 bezeichneten Lagereinrichtung dient.

Die Lagereinrichtung 7 ist innerhalb des Gehäuses 1 angeordnet. Sie umfaßt ein äußeres Tragelement 8, das fest an einer Gehäusewandung 9 montiert ist. Das Tragelement 8 weist einen inneren Hohlraum 10 auf, in den der Walzenzapfen 6 durch eine kreisrunde Öffnung 11 hineinragt. Die die Öffnung 11 begrenzende Wandung 12 ist konkav ausgebildet. In ihr ruht ein Lageraussenring 13 mit einer komplementär ausgebildeten Außenfläche 14, das durch diese Ausgestaltung in Richtung des Doppelpfeiles P um eine senkrecht zum Walzenzapfen verlaufende Achse verschwenkbar ist. Der Lageraußenring 13 besteht aus einem keramischen Werkstoff. Seine der Außenfläche 14 gegenüberliegende zylindrische Innenfläche 15 bildet eine Lagerfläche 16, die zusammen mit der zylindrischen Außenfläche 17 eines aus einem keramischen Werkstoff bestehenden Lagerinnenrings 18, der auf den Achszapfen 6 aufgeschoben ist, eine Gleitlagereinrichtung 19 bildet. Der Lagerinnenring 18 kann auf dem Achszapfen 6 und der Lageraußenring 13 kann in dem Tragelement 8 stoffschlüssig, beispielsweise durch Kleben oder Löten, formschlüssig, beispielsweise durch eine Feder-Nut Verbindung oder kraftschlüssig, beispielsweise durch ein Verspannen der Lagerelemente angebracht sein. Die Anbringung kann so ausgestaltet sein, daß eine Durchbiegung der Walze kompensiert werden kann. Zwischen der Gleitlagereinrichtung 19 und einem Bereich 20 vergrößerten Durchmessers des Achszapfens ist ein Ring 21 vorgesehen, der den zwischen den Flächen 16 und 17 gebildeten Lagerspalt gegen ein Eindringen fester Verunreinigungen abdeckt.

### BEZUGSZEICHENLISTE

- 1: Gehäuse
- 2: Warenbahn
- 3: Walzen
- 4: Reihe
- 5: Reihe
- 6: Walzenzapfen
- 7: Lagereinrichtung
- 8: Tragelement
- 9: Gehäusewandung
- 10: Hohlraum
- 11: Öffnung
- 12: Wandung
- 13: Lageraußenring
- 14: Außenfläche
- 15: Innenfläche
- 16: Lagerfläche
- 17: Außenfläche
- 18: Lagerinnenring
- 19: Gleitlagereinrichtung
- 20: Bereich
- 21: Ring

- 100: Behandlungsvorrichtung
- P: Doppelpfeil

## Patentansprüche

1. Behandlungsvorrichtung für eine textile Warenbahn,
mit mindestens einer Walze,
mit mindestens einer Lagereinrichtung zur drehbaren Lagerung der Walze in der Behandlungsvorrichtung, wobei die Lagereinrichtung einen zur Behandlungsvorrichtung drehfest angeordneten, undrehbaren Lagerteil und einen drehfest zu der Walze angeordneten, drehbaren Lagerteil umfaßt,
**dadurch gekennzeichnet**
**daß** die mindestens eine Walze in einem Gehäuse zur Aufnahme eines fluiden oder dampfförmigen Behandlungsmedium angeordnet ist und
**daß** die Lagereinrichtung als Gleitlageranordnung ausgebildet ist und zumindest eines der Lagerteile aus einem keramischen Werkstoff besteht, wobei die Lagereinrichtung außerhalb des Gehäuses angeordnet ist und eine die Lagereinrichtung nach außen abdeckende Abdeckkappe dichtwirkend an der Gehäusewandung vorgesehen ist, oder die Lagereinrichtung innerhalb des Gehäuses angeordnet ist.

2. Behandlungsvorrichtung nach Anspruch 1, **dadurch gekennzeichnet, daß** zumindest die Lagerfläche des anderen Lagerteils ebenfalls aus einem keramischen Werkstoff besteht.

3. Behandlungsvorrichtung nach Anspruch 2, **dadurch gekennzeichnet, daß** zumindest die Lagerfläche des anderen Lagerteils aus demselben keramischen Werkstoff besteht.

4. Behandlungsvorrichtung nach Anspruch 2, **dadurch gekennzeichnet, daß** zumindest die Lagerfläche des anderen Lagerteils aus einem anderen keramischen Werkstoff besteht.

5. Behandlungsvorrichtung nach Anspruch 1, **dadurch gekennzeichnet, daß** zumindest die Lagerfläche des anderen Lagerteils aus Kunststoff besteht.

6. Behandlungsvorrichtung nach Anspruch 1, **dadurch gekennzeichnet, daß** zumindest die Lagerfläche des anderen Lagerteils aus Metall besteht. Die mindestens eine Walze in einem Gehäuse zur Aufnahme eines fluiden oder dampfförmigen Behandlungsmediums angeordnet ist.

7. Behandlungsvorrichtung nach einem der Ansprüche 1 bis 6, **dadurch gekennzeichnet, daß** die Lagereinrichtung Mittel umfaßt, die ein Durchbiegen der Walze aufzunehmen geeignet sind.

8. Behandlungsvorrichtung nach Anspruch 7, **dadurch gekennzeichnet, daß** die Lagereinrichtung ein Element mit einer ballig geformten Außenfläche umfaßt, die mit einer komplementär geformten Innenfläche eines Gegenelements zusammenwirkt.

9. Behandlungsvorrichtung nach einem der Ansprüche 1 bis 8, **dadurch gekennzeichnet, daß** die Lagerteile stoffschlüssig, formschlüssig oder kraftschlüssig befestigt sind.

10. Behandlungsvorrichtung für eine textile Warenbahn, mit mindestens einer Walze, die an ihren stirnseitigen Enden jeweils einen Walzenzapfen umfaßt,
**dadurch gekennzeichnet,**
**daß** mindestens einer der Walzenzapfen aus einem keramischen Material besteht.
